**Europäisches Patentamt**

**European Patent Office**

**Office européen des brevets**

(19)

(11) Publication number: **0 015 280**
**B1**

(12) **EUROPEAN PATENT SPECIFICATION**

(45) Date of publication of patent specification: **06.10.82**

(51) Int. Cl.³: **B 23 D 21/04, B 23 D 45/08**

(21) Application number: **79900788.5**

(22) Date of filing: **06.07.79**

(86) International application number:
**PCT/SE79/00148**

(87) International publication number:
**WO 80/00138 07.02.80 Gazette 80/3**

(54) METHOD AND DEVICE FOR CUTTING OFF ELONGATED HOLLOW ELEMENTS.

(30) Priority: **06.07.78 DE 2829762**

(43) Date of publication of application:
**17.09.80 Bulletin 80/19**

(45) Publication of the grant of the patent:
**06.10.82 Bulletin 82/40**

(84) Designated Contracting States:
**DE FR GB SE**

(56) References cited:
**DE - A - 1 752 091**
**US - A - 1 063 789**
**US - A - 2 247 582**
**US - A - 3 211 059**
**US - A - 4 116 095**

(73) Proprietor: **SANDVIK AKTIEBOLAG**
**S-811 81 Sandviken 1 (SE)**

(72) Inventor: **FORSLUND, Erik, Gustaf, Robert**
**Höheweg 14**
**D-6940 Rippenweier (DE)**

(74) Representative: **Forsberg, Lars-Ake et al,**
**Sandvik Aktiebolag Patents and Licences Fack**
**S-811 81 Sandviken (SE)**

Courier Press, Leamington Spa, England.

Method and device for cutting off elongated hollow elements

The present invention relates to a method for cutting off elongated hollow elements, such as tubes, wherein the element is inserted through a milling cutter having inwardly directed cutting means, the milling cutter is rotated relative to the element and the element and the milling cutter are maintained in fixed mutual axial interrelationship during the cut-off operation. The invention also relates to a device for cutting off elongated hollow elements, which comprises a milling cutter having a plurality of cutting means directed radially inwards, means for rotating the milling cutter and means for rotating the elongated element.

The invention is particularly intended to be used in connection with oil drilling, where the well is supported by casings, i.e. tubes, having diameters ranging from about 10 to 90 centimeters. The tubes have a length of 10 to 12 meters and are provided with external threads at each end. The tubes are mutually interconnected by means of internally threaded coupling sleeves. The coupling sleeves are manufactured by cutting off blanks from long (in the order of 10 to 12 meters) tubes, which blanks are machined on specially designed machines.

The cut-off operation is a problem area in the manufacturing of the coupling sleeves. It has been suggested to rotate and cut off the tubes by means of a stationary cut-off tool. Due to the length and out-of roundness of the tubes, the cutting speed is limited. Further, the tools are often damaged by the tube element being cut at the moment when the tools break through the wall of the tube.

This gives low machine efficiency and high tool cost.

It is also known to maintain the tube stationary and use a machine having a rotating plate. One or several sides are radially movably mounted on the rotating plate. The cut-off tools are mounted on the slides and during the rotation the slides are moved towards the centre of the tube, thereby cutting off the tube. Also in this case low machine efficiency is obtained due to big chip problems and instability. Further, the cutting speed is limited due to balance problems.

Further, US—A—1063789 discloses a machine for cutting off elongated elements by using a milling cutter having a plurality of cutting means directed radially inwards. The milling cutter is slidably mounted for cut-off movement. During the cut-off operation the elongated element is stationary.

US—A—2247582 discloses a machine for milling external cylindrical surfaces. The machine comprises a milling cutter having inwardly directed cutting means. During the milling operation both the cutter and the cylindrical element are rotated. The required feeding movement of the milling cutter is obtained by a swingable support thereof.

The present invention relates basically to a machine of the last-mentioned type and the object of the present invention is to provide a method and a device for cutting off tubes, where a comparatively high cutting speed can be used while simultaneously giving a smoother cutting and less risks for damage to the equipment and to the tube element being cut.

Preferably, a milling cutter of a type known per se, for instance by DE—A—1752091, is used in which the cutting edges of the cutting means are positioned in staggered axial interrelationship so that some of the cutting edges cut different zones than other cutting edges.

The above and other objects of the invention are obtained by giving the invention the characteristic features stated in the claims following hereinafter.

The invention is described in detail in the following description with reference to the accompanying drawings.

It is to be understood that the embodiment illustrated therein is only illustrative of the invention and that various modifications thereof may be made within the scope of the claims.

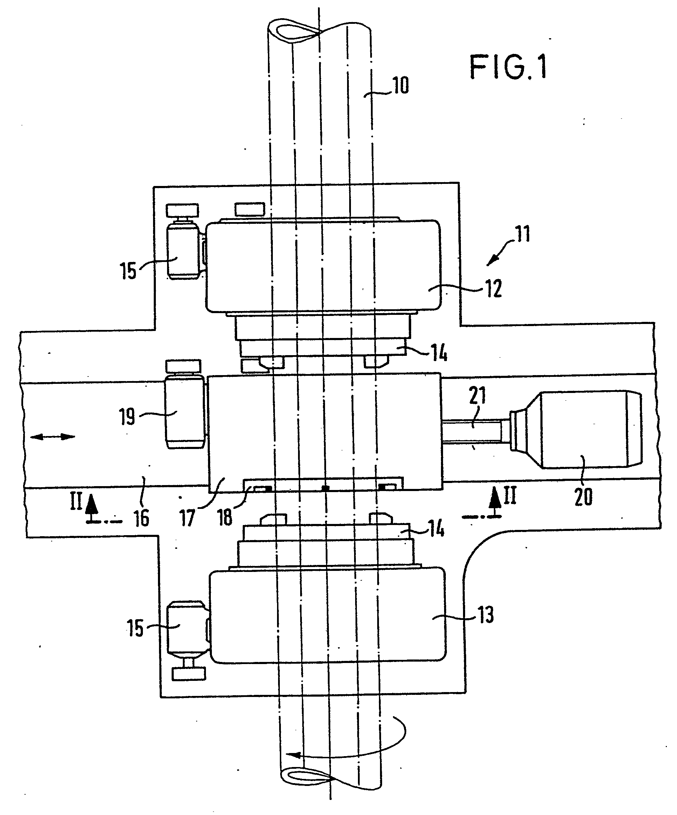

In the drawings, Fig. 1 shows a top view of a device according to the embodiment of the invention.

Fig. 2 shows a section taken on the line II—II in Fig. 1,

Fig. 3 shows a portion of the cut-off tool on a larger scale,

Fig. 4 shows a detail of the cutting inserts sites in the cut-off tool on a still larger scale.

Fig. 5 shows a similar top view as in Fig. 4 but wherein the cutting insert is located at the opposite side of the cut-off tool, and

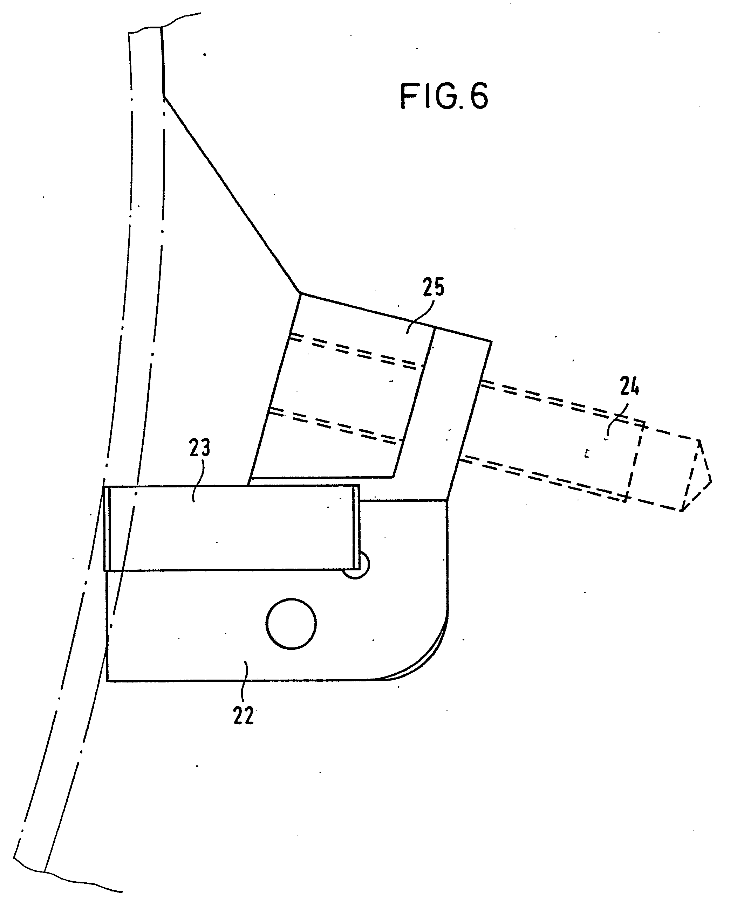

Fig. 6 shows a side view of the cutting insert site in Fig. 5.

Fig. 1 shows a tube 10 mounted in a cut-off machine 11. The machine comprises holders 12 and 13 with rotatable chucks 14 for gripping the tube. The chucks 14 are driven in synchronism by motors 15.

Between the holders 12 and 13 there is a guide bed 16 on which is slidably mounted a cutter housing 17 carrying a milling cutter 18. The cutter is rotated by a motor 19 and the housing 17 is moved along the guide bed 16 by a motor 20 through a screw transmission 21. In the illustrated embodiment, the guide bed 16 is plane but the transverse motion of the cutter may have some other shape, for instance curved or circular.

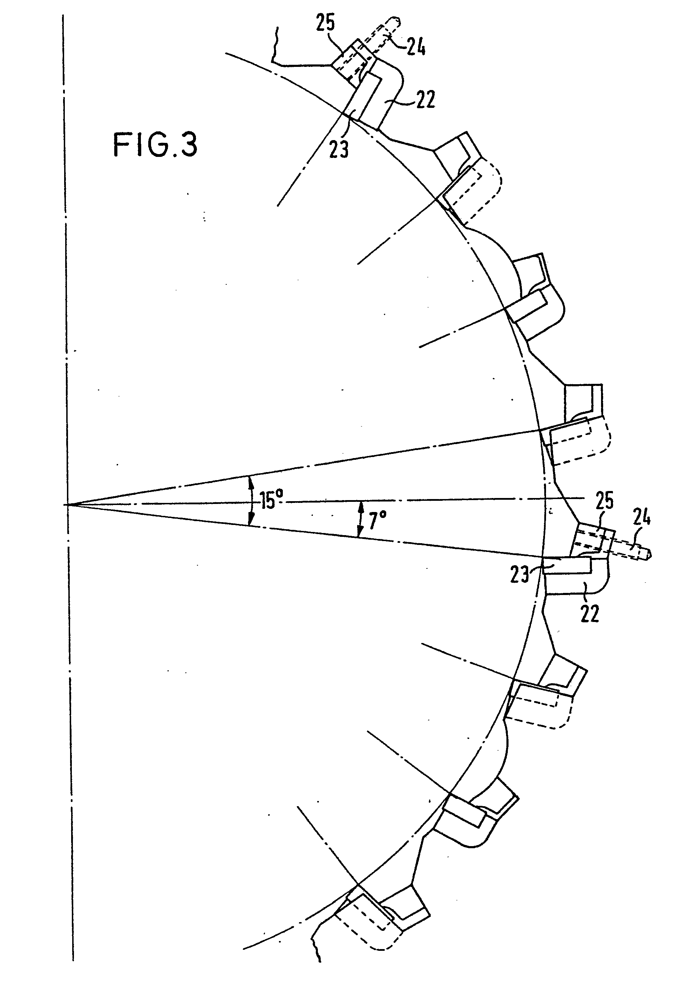

Fig. 3 shows the cutter 18 with a number of the insert sites. Each site comprises a recess containing a backing up shim plate 22, a cutting insert 23 and a clamping screw 24 with a clamping wedge 25.

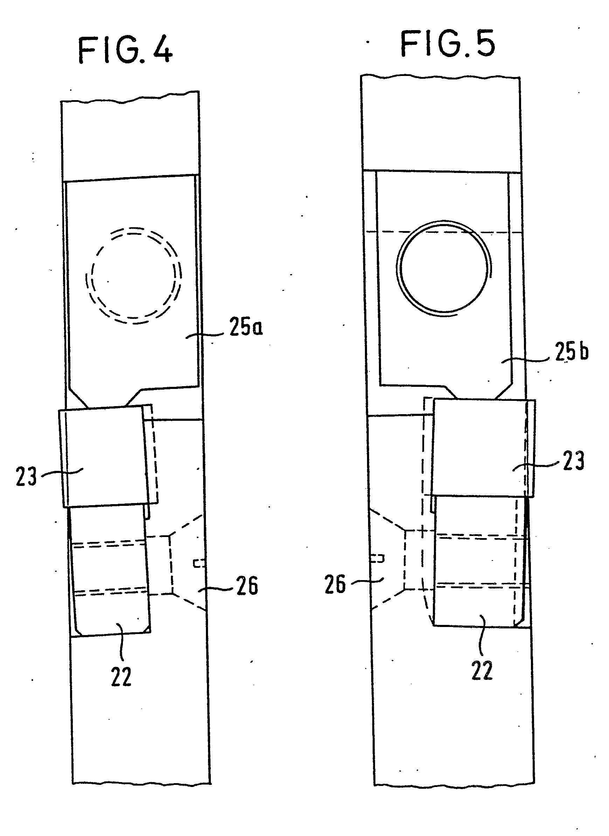

The cutting inserts 23 are mounted in a staggered mutual interrelationship so that every other insert cuts about half of the thickness of the cut and every other insert cuts the other half, the halves slightly overlapping in the middle. This is illustrated in Figs. 4 and 5. The insert sites are orientated slightly obliquely together with the inserts 23 and the shims 22. The shims are fastened with screws 26. The wedges 25 are of two different types, 25a and 25b, depending on which side they are placed on.

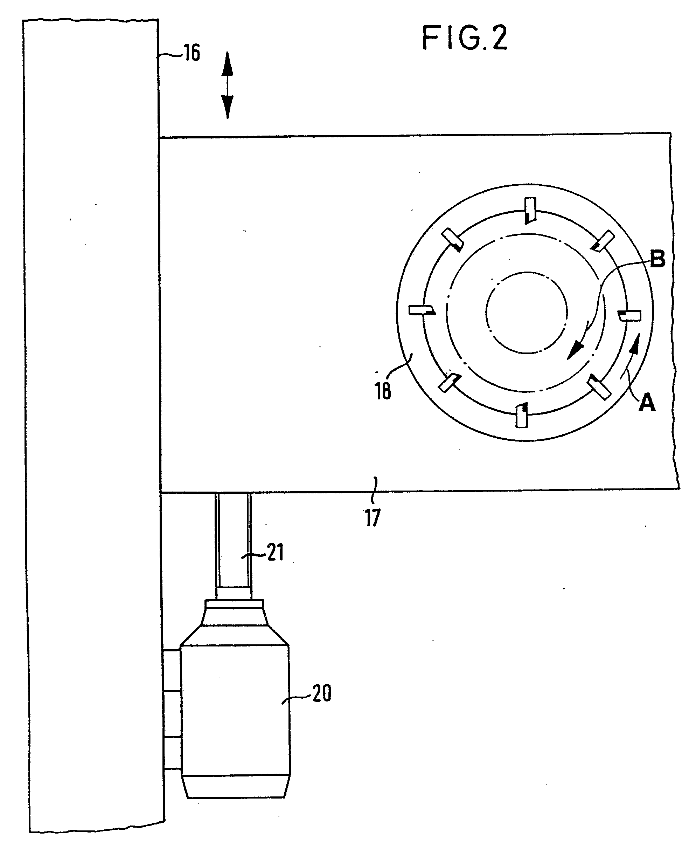

According to the embodiment of the invention the cutting of a tube is carried out as described below. First, the tube 10 is positioned as shown in Fig. 1 and clamped by the chucks 14. The milling cutter 18, then, is rotated in counter-clockwise direction in Fig. 2 as indicated by arrow A by means of the motor 19. The milling cutter 18 is moved laterally by means of the motor 20 during the rotation of the milling cutter. The tube 10 is maintained stationary till the milling cutter 18 has cut through the wall of the tube 10. Then, the motors 15 are started, thereby rotating the tube 10 slowly in clockwise direction in Fig. 2 as indicated by arrow B. The tube 10 is rotated till the cut-off around the whole tube is completed. During the rotation of the tube the milling cutter is maintained stationary in its lateral position.

According to the embodiment of the invention, alternatively, the tube 10 and the milling cutter 18 are rotated simultaneously during the whole cut-off operation. In this case the milling cutter 18 is moved laterally during the rotation of the milling cutter and the tube.

In the above described operations, the milling cutter 18 and the tube 10 have opposite rotational directions. According to the invention, however, the milling cutter and the tube can have the same rotational direction. The rotational speeds of the milling cutter and the tube and the speed of the lateral feed mechanism 20, 21 for the milling cutter are preferably adjusted in mutual relationship for obtaining optimal cutting with as small vibrations as possible. The rotational speed of the milling cutter shall be preferably much higher than the rotational speed of the tube. It is believed that the ratio therebetween should be larger than 50, with preference for values in the order of 60—120, in cases where the ratio between the diameters of the tube and the milling cutter is larger than 0.7. If the diameter of the tube is smaller, then the ratio between the rotational speeds can be decreased in proportion to the decrease of the diameter of the tube. Typically, a cutting speed of 120 m/min, i.e. a rotational speed of about 340 rpm when the diameters of the tube and the milling cutter are respectively 0.5 and 0.7 meter, and a rotational speed of the tube of about 3 rpm are believed to be suitable.

## Claims

1. Method of cutting off elongated hollow elements, such as tubes, comprising inserting the element (10) through a milling cutter (18) having inwardly directed cutting means (23), rotating the milling cutter (18) relative to the element (10) while maintaining the milling cutter (18) and the element (10) in fixed mutual axial interrelationship during the cut-off operation, and moving the milling cutter (18) laterally relative to the longitudinal axis of the element (10) along a linear slide means (16) during at least the initial phase of the cut-off operation, characterized by simultaneously rotating the element (10) at least during the final phase of the cut-off operation at a slower rotational speed than the rotational speed of the milling cutter (18).

2. A method according to claim 1, comprising rotating the element (10) at such a speed that the ratio between the rotational speeds of the milling cutter (18) and the element (10) is larger than 50, with preference for values in the order of 60—120; the ratio between the diameters of the element (10) and the milling cutter (18) being larger than 0.7.

3. A method according to claim 1 or 2, comprising rotating the element (10) during the whole cut-off operation.

4. A method according to any of claims 1—3, comprising rotating the element (10) and the milling cutter (18) in opposite directions.

5. A method according to any of claims 1—3, comprising rotating the element (10) and the milling cutter (18) in the same direction.

6. A device for cutting off elongated hollow elements, such as tubes, comprising a milling cutter (18) having a plurality of cutting means (23) directed radially inwards, means (19) for rotating the milling cutter (18), a linear slide means (16), and first power means (20) for moving the milling cutter (18) along said slide means laterally relative to the longitudinal axis of the element (10), characterized in that the device comprises two rotatable chucks (14) for clamping the elongated element (10), said chucks being driven by second power means (15) for rotating the elongated element (10).

7. A device according to claim 6, wherein cutting edges of the cutting means (23) are positioned in staggered axial interrelationship so that at least some of the cutting edges cut different zones than other cutting edges.

8. A device according to claim 7, wherein the cutting edges are positioned in such a way that one cutting means cuts about half the width of the overall cut and consecutive cutting means cuts the other half.

## Revendications

1. Procédé en vue de sectionner des éléments creux allongés tels que des tubes, ce procédé consistant à introduire un élément (10) à travers une fraise (18) comportant des éléments coupants dirigés vers l'intérieur (23), faire tourner la fraise (18) par rapport à l'élément (10) tout en maintenant cette fraise (18) et cet élément (10) en interrelation axiale mutuelle fixe au cours de l'opération de sectionnement, puis déplacer la fraise (18) latéralement par rapport à l'axe longitudinal de l'élément (10) le long d'un élément de glissement linéaire (16) au moins pendant la phase initiale de l'opération de sectionnement, caractérisé en ce que, au moins au cours de la phase finale de l'opération de sectionnement, on fait tourner simultanément l'élément (10) à une vitesse de rotation inférieure à la vitesse de rotation de la fraise (18).

2. Procédé suivant la revendication 1, caractérisé en ce qu'il consiste à faire tourner l'élément (10) à une vitesse telle que le rapport entre les vitesses de rotation de la fraise (18) et de l'élément (10) soit supérieur à 50 et se situe, de préférence, à des valeurs de l'ordre de 60—120, le rapport entre les diamètres de l'élément (10) et de la fraise (18) étant supérieur à 0,7.

3. Procédé suivant la revendication 1 ou 2, caractérisé en ce qu'il consiste à faire tourner l'élément (10) au cours de toute l'opération de sectionnement.

4. Procédé suivant l'une quelconque des revendications 1 à 3, caractérisé en ce qu'il consiste à faire tourner l'élément (10) et la fraise (18) dans des directions opposées.

5. Procédé suivant l'une quelconque des revendications 1 à 3, caractérisé en ce qu'il consiste à faire tourner l'élément (10) et la fraise (18) dans la même direction.

6. Dispositif en vue de sectionner des éléments creux allongés tels que des tubes, ce dispositif comprenant une fraise (18) comportant plusieurs éléments de coupe (23) dirigés radialement vers l'intérieur, un élément (19) en vue de faire tourner la fraise (18), un élément de glissement linéaire (16), ainsi qu'un premier élément moteur (20) destiné à déplacer la fraise (18) le long de cet élément de glissement et latéralement par rapport à l'axe longitudinal de l'élément (10), caractérisé en ce qu'il comprend deux mandrins rotatifs (14) destinés à serrer l'élément allongé (10), ces mandrins étant entraînés par un deuxième élément moteur (15) en vue de faire tourner l'élément allongé (10).

7. Dispositif suivant la revendication 6, caractérisé en ce que les tranchants des éléments de coupe (23) sont disposés en une interrelation axiale en quinconce de telle sorte qu'au moins certains de ces tranchants coupent des zones différentes de celles coupées par d'autres tranchants.

8. Dispositif suivant la revendication 7, caractérisé en ce que les tranchants sont disposés de telle sorte qu'un élément de coupe à peu près la moitié de la largeur de la coupe globale et que l'élément coupant suivant coupe l'autre moitié.

**Patentansprüche**

1. Ein Verfahren zum Abschneiden länglicher Hohlteile wie Rohre, bei denen das Werkstück (10) durch einen Schneidfräser (18) mit nach innen gerichteten Schneidelementen (23) gesteckt und der Schneidfräser (18) im Verhältnis zu dem Werkstück (10) rotiert wird, wobei der Schneidfräser (18) und das Werkstück (10) während des Schneidvorgangs in einer festen gegenseitigen Axialbeziehung verbleiben und der Schneidfräser (18) wenigstens in der Anfangsphase des Schneidvorsgang entlang einer linearen Führungsbahn (16) seitlich im Verhältnis zur Längsachse des Werkstücks (10) verschoben wird, dadurch gekennzeichnet, daß das Werkstück (10) mindestens während der Endphase des Schneidvorgangs gleichzeitig gedreht wird, und zwar mit einer geringeren Drehzahl als der Drehzahl des Schneidfräsers (18).

2. Ein Verfahren im Einklang mit Anspruch 1, bei dem das Werkstück (10) mit einer solchen Drehzahl gedreht wird, daß das Verhältnis zwischen den Drehzahlen des Schneidfräser (18) und des Werkstücks (10) größer ist als 50 und vorzugsweise von 60 bis 120; gleichzeitig sollte das Verhältnis zwischen den Durchmessern des Werkstücks (10) und des Schneidfräsers (18) größer sein als 0,7.

3. Ein Verfahren im Einklang mit Anspruch 1 oder 2, bei dem das Werkstück (10) während des gesamten Schneidvorgangs gedreht wird.

4. Ein Verfahren im Einklang mit einem oder mehreren der Ansprüche 1—3, bei dem das Werkstück (10) und der Frässchneider (18) in entgegengesetzten Richtungen gedreht werden.

5. Ein Verfahren im Einklang mit einem oder mehreren der Ansprüche 1—3, bei dem das Werkstück (10) und der Schneidfräser (18) in der gleichen Richtung gedreht werden.

6. Eine Vorrichtung zum Schneiden länglicher Hohlteile wie Rohre mit einem Frässchneider (18), bei dem mehrere Schneidelemente (23) radial nach innen weisen, mit einer Vorrichtung (19) zum Drehen des Frasschneiders (18), einer linearen Führungsbahn (16) und einer ersten Kraftquelle (20) zum Verschieben des Schneidfräsers (18) entlang der besagten Führungsbahn, und zwar seitlich im Verhältnis zu der Langsachse des Werkstücks (10), dadurch gekennzeichnet, daß, die Vorrichtung zwei drehbare Spannfutter (14) zum Spannen des länglichen Werkstücks (10) umfaßt, wobei die besagten Spannfutter durch eine zweite Kraftquelle (15) zum Drehen des länglichen Werkstücks (10) angetrieben werden.

7. Eine Vorrichtung im Einklang mit Anspruch 6, bei der die Schneidkanten des Schneidelements (23) axial versetzt angeordnet sind, so daß mindestens einige der Schneidkanten andere Zonen schneiden als andere Schneidkanten.

8. Eine Vorrichtung im Einklang mit Anspruch 7, bei der die Schneidkanten so ageordnet sind,

**0 015 280**

daß ein Schneidelement der Breite nach etwa den halben Gesamtschnitt ausführt und das nächste Schneidelement die andere Hälfte des Gesamtschnitts bewirkt.

FIG.1

# FIG.2

## FIG.3

15°

7°

25
24
22
23

25
24
23
22

# FIG. 4

# FIG. 5

25a

25b

23

23

26

26

22

22

4

# FIG.6